# EUROPEAN PATENT SPECIFICATION

(11) **EP 1 913 062 B1**
(45) Date of publication and mention of the grant of the patent: **17.08.2011**
(21) Application number: 06773456.6
(22) Date of filing: 19.06.2006
(51) Int. Cl.: C09J 133/08, C09J 133/10, C09J 5/00, C09J 4/06, C08F 2/46

(54) **PHOTOCURABLE ELASTOMER COMPOSITIONS**
PHOTOHÄRTBARE ELASTOMERZUSAMMENSETZUNGEN
COMPOSITIONS ELASTOMERES PHOTODURCISSABLES

(30) Priority: 21.06.2005 US 692446 P
(43) Date of publication of application: 23.04.2008
(60) Divisional application: 11168452.8
(73) Proprietor: Henkel Corporation, Rocky Hill, CT 06067 (US)
(72) Inventor: LIONBURGER, James, E.,, Rocky Hill, CT 06067 (US); WOODS, John, G.,, Farmington, CT 06032 (US); SCHALL, Joel, D.,, Hamden, CT 06514 (US)
(74) Representative: Endres, Helmut
(86) International application number: PCT/US2006/023679
(87) International publication number: WO 2007/001937

(56) References cited:
- WO-A-99/37731
- US-A- 5 889 118
- US-B1- 6 346 300
- US-B2- 6 841 234
- US-B2- 7 156 944

## Description

### Field of the Invention

The present invention relates to photocurable elastomer compositions and methods of preparation and use of such compositions. More particularly, the present invention relates to photocurable elastomer compositions useful for cure-in-place applications such as the formation of gaskets on parts.

### Brief Description of Related Technology

Curable compositions have been used widely for sealing, adhesive, coating and potting applications, to name a few. The choice of elastomeric backbones and curable groups is generally selected with reference to the specific end use application and the environment in which it is intended to be used. Polymers having various degrees of unsaturated groups, as well as other functionally crosslinking groups have been used.

Elastomeric sealing applications, and in particular gasketing applications, have conventionally been manufactured in molding processes. Gaskets produced from these processes are then fitted onto the specific article or application to be sealed. These gaskets are generally produced at high temperature to effectuate proper crosslinking, and thus require heat to do so. Additionally, because these gaskets are made in advance, they can only be used in predetermined applications and for predetermined sized parts.

Cure-in-place gaskets ("CIPG") solve some of the disadvantages of more conventional molded or precut gaskets because the CIPG gaskets are designed to be applied directly on the part and cured in place. In this way the size of the gasket can be controlled by dispensing the composition in a manner and amount appropriate to the conditions. Various adhesive compositions and applications have employed these types of gaskets. Often the cure temperature required to get a proper seal is relatively high, which can be problematic if deformation occurs due to high temperatures or long cure periods, as well as the manufacturing costs associated with longer cure times and energy expenditure. In the manufacture of automotive components, for example, parts on an assembly line may be exposed to hydrocarbon fluids, such as oils and fuels, and curing of the elastomer to a point sufficient to resist such liquids in an expeditious manner is desirable. Prior compositions used for CIPG products suffer from the inability to satisfactorily overcome some of these disadvantages.

### SUMMARY OF THE INVENTION

The present invention provides a new class of photocurable elastomer compositions. More particularly, yet in its broadest sense, the inventive photocurable elastomer compositions include an elastomer component, a monofunctional and/or multifunctional reactant, e. g., crosslinking agent, and an initiator for photocure. The initiator (or, photoinitiator) may be a visible or an ultraviolet ("UV") photoinitiator. The compositions of the present invention are useful, for example, for cure-in-place applications, such as gasketing applications.

In yet another aspect of the present invention, there is provided a composition including: about 35 to about 95 weight percent of an elastomer which includes at least one polyfunctional (meth)acrylate portion and at least one monofunctional (meth)acrylate portion; about 1.0 to about 25 weight percent of at least one multifunctional (meth)acrylate; and about 0.1 to about 10.0 weight percent of a photoinitiator, such as a UV photoinitiator.

In another aspect of the present invention, there is provided a composition including: about 35 to about 95 weight percent of an elastomer which includes alkyl (meth)acrylate polymers selected from homopolymers of C₁-C₁₀ alkyl (meth)acrylates and copolymers of C₁-C₁₀ alkyl (meth)acrylates; a monofunctional reactant such as about 1.0 to about 25 weight percent thereof; and about 0.1 to about 10.0 weight percent of a photoinitiator, such as a UV photoinitiator.

In yet another aspect of the present invention, there is provided a process for applying a seal to an article including the stops of: forming a mixture of a composition which includes: i) about 35 to about 65 weight percent of an elastomer including alkyl (meth)acrylate polymers selected from homopolymers of C₁-C₁₀ alkyl (meth)acrylates and copolymers of C₁-C₁₀ alkyl (meth)acrylates; ii) about 1.0 to about 25 weight percent of a multifunctional reactant; and iii) about 0.1 to about 10.0 weight percent of a visible light photoinitiator; depositing the mixture on the article in the shape and thickness desired to form an uncured seal; and irradiating the uncured seal with radiation appropriate to and for a time sufficient to form a cured seal.

In yet another aspect of the present invention, there is provided a process for applying a seal to an article including the steps of: forming a mixture of a composition which includes: i) about 35 to about 95 weight percent of an elastomer including alkyl (meth)acrylate polymers selected from homopolymers of C₁-C₁₀ alkyl (meth)acrylates and copolymers of C₁-C₁₀ alkyl (meth)acrylates, ii) a monofunctional reactant, such as about 1.0 to about 25 weight percent thereof; and iii) about 0.1 to about 10.0 weight percent of a photoinitiator, such as a UV photoinitiator; depositing the mixture on the article in the shape and thickness desired to form an uncured seal; and irradiating the uncured seal with radiation appropriate to and for a time sufficient to form a cured seal.

### DETAILED DESCRIPTION OF THE INVENTION

The present invention is directed to photocurable elastomer compositions. The photocurable elastomer compositions include an elastomer component, a monofunctional or multifunctional reactant and an initiator. The initiator may be a visible or a UV initiator, or both. The components may be present in different amounts, depending on the combination of components and composition desired.

The compositions of the present invention may be useful, for example, for cure-in-place applications. They may be used for applying a seal to an article, such as, for example, a gasket. More specifically, the uncured compositions may be directly applied to an article or surface to be sealed and exposed to UV or visible radiation to cure the composition and form a seal.

The term "cure" or "curing," as used herein, refers to a change in state, condition, and/or structure in a material that is usually, but not necessarily, induced by at least one variable, such as time, temperature, moisture, radiation, presence and quantity in such material of a curing catalyst or accelerator, or the like. The terms cover partial as well as complete curing. For purposes of the present invention, the terms mean at least partially crosslinked, and in more desirable embodiments substantially or fully crosslinked.

One component contained in the compositions of the present invention is an elastomer. The some embodiments of the present invention, the elastomer component is a homopolymer of C₁-C₁₀ (meth)acrylates or a copolymer of C₁-C₁₀ (meth)acrylates. Suitable alkylacrylates include, but are not limited to, ethyl acrylate, butyl acrylate and 2-ethylhexyl acrylate. Copolymeric acrylate elastomers or rubbers may contain copolymerized units of up to 40 weight percent monovinyl monomers, for example, styrene, acrylonitrile, vinylbutyl ether, acrylic acid and C₁-C₁₀ alkyl acrylates different from the principal alkyl acrylate comonomer. Such copolymers are available commercially, for example, as Hytemps® acrylate rubbers (acrylic homopolymer and copolymer rubbers available from Nippon Zeon, KK) and Toacron® AR-601 acrylate rubbers (polyethylacrylate polymers, available from Toa Paint, KK).

Certain of such alkyl acrylate polymers are described more fully in U.S. Patent No. 6,506,460 to Paglia et al, which is incorporated by reference herein in its entirety. groups. In some embodiments, such elastomers include a polyfunctional (meth)acrylate portion and at least one monofunctional (meth)acrylate portion. The polyfunctional (meth)acrylate portion may compose the main chain of the polymer while the monofunctional (meth)acrylate portions are terminal groups.

For example, the elastomer may be a (meth)acryloyl-terminated vinyl polymer. Such vinyl polymers accordingly may have at least one terminal group represented by general Formula (I) per molecule:

-OC(O)C(R)=CH₂ (I)

The number of the groups of the above general Formula (I) per molecule is not particularly restricted, but is desirably not less than 1 per molecule. In some embodiments, the number of the groups of Formula, (I) pet molecule is 1.2 to 4.

Referring to the general Formula (I), R represents hydrogen or an organic group of 1 to 20 carbon atoms, Desirably, R is hydrogen or a hydrocarbon group of 1 to 20 carbon atoms, thus including such species as -H, -CH₃, -CH₂CH₃, -(CH₂)ₙCH₃ (n= an integer of 2 to 19), -C₆H₅, -CH₂OH and -CN, among others. More desired are -H and -CH₃.

The main chain of the polymer may be multifunctional, thereby imparting a higher degree of functionality to the polymer than the alkyl (meth)acrylate polymers described above. The main chain of the vinyl polymer desirably is comprised of a (meth)acrylic polymer, more desirably comprised of an acrylic ester polymer. A styrenic polymer also may be used.

The monomer to form the main chain of the vinyl polymer is not particularly restricted but a variety of monomers may be selectively employed. Suitable examples include, but are not limited to, (meth)acrylic monomers such as (meth)acrylic acid, methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, n-pentyl (meth)acrylate, n-hexyl (meth)acrylate, cyclohexyl (meth)acrylate, n-heptyl (meth)acrylate, n-octyl (meth)acrylate, 2-ethylhexyl (meth)acrylate, nonyl (meth)acrylate, decyl (meth)acrylate, dodecyl (meth)acrylate, phenyl (meth)acrylate, tolyl (meth)acrylate, benzyl (meth)acrylate, 2-methoxyethyl (meth)acrylate, 3-methoxybutyl (meth)acrylate, 2-hydroxyethyl (meth)acrylate, 2-hydroxypropyl (meth)acrylate, stearyl (meth)acrylate, glycidyl (meth)acrylate, 2-aminoethyl (meth)acrylate, γ-(methacryloyloxypropyl)trimethoxysilane, (meth)acrylic acid-ethylene oxide adduct, trifluoromethylmethyl (meth)acrylate, 2-trifluoromethylethyl (meth)acrylate, 2-perfluoroethylethyl (meth)acrylate, 2-perfluoroethyl-2-perfluorobutylethyl (meth)acrylate, 2-perfluoroethyl (meth)acrylate, perfluoromethyl (meth)acrylate, diperfluoromethylmethyl (meth)acrylate, 2-perfluoromethyl-2-perfluoroethylmethyl (meth)acrylate, 2-perfluorohexylethyl (meth)acrylate, 2-perfluorodecylethyl (meth)acrylate, 2-perfluorohexadecylethyl (meth)acrylate, etc.; styrenic monomers such as styrene, vinyltoluene, α-methylstyrene, chlorostyrene, styrenesulfonic acid and its salt; fluorine-containing vinyl monomers such as perfluoroethylene, perfluoropropylene, vinylidene fluoride, etc.; silicon-containing vinyl monomers such as vinyltrimethoxysilane, vinyltriethoxysilane, etc.; maleic anhydride, maleic acid, monoalkyl esters and dialkyl esters of maleic acid; fumaric acid and monoalkyl esters and dialkyl esters of fumaric acid; maleimide monomers such as maleimide, methylmaleimide, ethylmaleimide, propylmaleimide, butylmaleimide, hexylmaleimide, octylmaleimide, dodecylmaleimide, stearylmaleimide, phenylmaleimide, cyclohexylmaleimide, etc.; nitrile-containing vinyl monomers such as acrylonitrile, methacrylonitrile, etc.; amide-containing vinyl monomers such as acrylamide, methacrylamide, etc.; vinyl esters such as vinyl acetate, vinyl propionate, vinyl pivalate, vinyl benzoate, vinyl cinnamate, etc.; alkenes such as ethylene, propylene, etc.; conjugated dienes such as butadiene, isoprene, etc.; vinyl chloride, vinylidene chloride, allyl chloride and allyl alcohol. These monomers may be used each alone or a plurality of them may be copolymerized.

The vinyl polymer may have a molecular weight distribution, i.e. the ratio of weight average molecular weight to number average molecular weight as determined by gel permeation chromatography, of less than 1.8, preferably not more than 1.7, more preferably not more than 1.6, still more preferably not more than 1.5, particularly not more than 1.4, most preferably not more than 1.3.

The number average molecular weight of the vinyl polymer may be 500 to 100000, more desirably 3000 to 40000.

Such vinyl polymers are described more fully in European Patent Publication No. EP 1 059 308 A1.

The elastomer component may be present in varying amounts, depending on the combination of components desired. For example, in some embodiments, the elastomer is present in amounts of about 35% to about 65%, more specifically about 50% to about 65% by weight of the composition. In other embodiments of the present invention, the elastomer is present in amounts of about 35% to about 95%, more specifically about 50% to about 95% by weight of the composition.

In addition to the elastomer component, the compositions of the present invention also may contain at least one reactant, e.g., crosslinking agent or reactive diluent. The reactant may be a monofunctional reactant, a multifunctional reactant or a combination thereof.

In some embodiments, the reactant is a monofunctional reactant. Examples of suitable monofunctional reactants include, but are not limited to, (meth)acrylate monomers, such as, n-butyl (meth)acrylate, 2-ethylhexyl (meth)acrylate, isooctyl (meth)acrylate and isononyl (meth)acrylate, isobornyl acrylate, ethoxyethoxyethyl acrylate, cyclic acrylate monomers, styrenic monomers.

Some embodiments of the present invention include a multifunctional reactant. The multifunctional reactant is a (meth)acrylic crosslinking agent. By multifunctional (meth)acrylic crosslinking agent is meant an ester that is a reaction product of a polyhydroxylic compound, generally a polyhydroxylic alcohol, and acrylic acid or methacrylic acid, wherein the crosslinking agent has at least two carbon-carbon double blonds. Such compositions are commonly referred to in the art as multifunctional acrylates or multifunctional methacrylates. Typically, multifunctional acrylates and methacrylates have molecular weights of 150 to 1,000 and contain at least two polymerizable unsaturated groups per molecule.

Representative multifunctional acrylic crosslinking agents include acrylates and methacrylates such as, but not limited to: ethylene glycol diacrylate; ethylene glycol dimethacrylate; 1,6-hexanediol diacrylate; 1,6-hexanediol dimethacrylate; 1,4-butanediol diacrylate; pentaerythritol triacrylate; pentaerythritol tetraacrylate; dipentaerythritol pentaacrylate, methoxy-1,6-hexanediolpontaerythritol triacrylate; trimethylolpropane triacrylate; tetraethylene glycol diacrylate; polymethacrylate urethanes; epoxy acrylates; polyester acrylate monomers and oligomers; trimethylolpropane propoxylate triacrylate; poly-n-butyleneoxide glycol diacrylates; and bisphenol A alkylene oxide adduct diacrylates. Trimethylolpropane triacrylate and trimethylolpropane trimethacrylate may be desired crosslinking agents because these compounds are readily available. In addition, compression set and crosslink density may be enhanced in compositions containing these crosslinking agents compared to compositions containing difunctional acrylates, such as diethylene glycol dimethacrylate.

As described above for the elastomer component, monofunctional and multifunctional reactants may be present in varying amounts, depending on the final combination of components desired. Varying the relative amounts permits tailoring of the properties of the compositions and their cured forms. The embodiments of the present invention, the reactant is present in amounts of about 1% to about 25% by weight of the composition.

The compositions of the present invention also may include a photoinitiator, such as a UV initiator, a visible initiator or a combination of UV and visible initiators.

A variety of UV initiators may be employed. UV initiators are generally affective in the 200 to 400 nm range, and particularly in the portion of the spectrum that borders on the invisible light and the visible portion just beyond this, e.g. >200 nm to about 390 nm.

Initiators that will respond to UV radiation to initiate and induce curing of the (meth)acryl functionalized curable component, which are useful in the present invention include, but are not limited to, benzophenone and substituted benzophenones, acetophenone and substituted acetophenones, benzoin and its alkyl esters, xanthone and substituted xanthones, phosphine oxides, diethoxy-acetophenone, benzoin methyl ether, benzoin ethyl ether, benzoin isopropyl ether, diethoxyxanthone, chloro-thio-xanthone, N-methyl diethanol-amine-benzophenone, 2-hydroxy-2-methyl-1-phenyl-propan-1-one, 2-benzyl-2-(dimethylamino)-1-[4-(4-morpholinyl)phenyl]-1-butanone and mixtures thereof.

Examples of such UV initiators include initiators available commercially from Ciba Specialty Chemicals Inc. under the "IRGACURE" and "DAROCUR" tradenames, specifically "IRGACURE" 184 (1-hydroxycyclohexyl phenyl ketone), 907 (2-methyl-1-[4-(methylthio)phenyl]-2-morpholino propan-1-one), 369 (2-benzyl-2-N,N-dimethylamino-1-(4-morpholinophenyl)-1-butanone), 500 (the combination of 1-hydroxy cyclohexyl phenyl ketone and benzophenone), 651 (2,2-dimethoxy-2-phenyl acetophenone), 1700 (the combination of bis(2,6-dimethoxybenzoyl-2,4,4-trimethyl pentyl) phosphine oxide and 2-hydroxy-2-methyl-1-phenyl-propan-1-one), and 819 [bis(2,4,6-trimethyl benzoyl) phenyl phosphine oxide], and "DAROCUR" 1173 (2-hydroxy-2-methyl-1-phenyl-1-propane) and 4265 (the combination of 2,4,6-trimethylbenzoyldiphenyl-phosphine oxide and 2-hydroxy-2-methyl-1-phenyl-propan-1-one); and 2,4,6-trimethylbenzoyldiphenylphosphine oxide (commercially available as LUCIRIN TPO from BASF Corp.). Of course, combinations of these materials may also be employed herein. Of course, it is understood that some of these photoinitiators categorized herein as UV photoinitiators have a tailing absorption into the visible range, and thus straddle the line between UV and visible light cure initiators, but nonetheless are included herein as part of the invention.

Initiators suitable for use in the present invention that will respond to visible light to initiate and induce curing include, but are not limited to, camphoroquinone peroxyester initiators, 9-fluorene carboxylic acid peroxyesters, visible light [blue] photoinitiators, dl-camphorquinone, "IRGACURE" 784DC (photoinitiator based on substituted titanocenes), and combinations thereof.

Other suitable photoinitiator systems include those disclosed in each of the following patents or publications, each of which is incorporated by reference herein in its entirety. U.S. Patent No. 4,505,793 to Tamoto et al., which is incorporated by reference herein, discloses photopolymerization initiators that include a combination of a 3-keto-substituted cumarin compound and an active halogeno compound. A number of exemplary compounds are disclosed. Such photopolymerization initiators cure by exposure to light having wavelengths ranging between about 180 nm and 600 nm. U.S. Patent No. 4,258,123 to Nagashima et al., which is incorporated by reference herein, discloses photosensitive resin compositions including initiator components that generate a free radical upon irradiation with actinic light. Such components include various triazine compounds, as more fully described therein.

European Patent Publication No. EP 0 369 645 A1 discloses a three-part photoinitiator system which includes a trihalomethyl substituted-s-triazine, a sensitizing compound capable of absorbing radiation in the range of about 300-1000 nm and an electron donor. Exemplary sensitizing compounds are disclosed, including: ketones; coumarin dyes; xanthene dyes; 3H-xanthen-3-one dyes; acridine dyes; thiazole dyes; thiazine dyes; oxazine dyes; azine dyes; aminoketone dyes; methane and polymethine dyes; porphyrins; aromatic polycyclic hydrocarbons; p-substituted aminostyryl ketone compounds; aminotriaryl methanes; merocyanines; squarylium dyes; and pyridinium dyes. Exemplary donors also are disclosed, including: amines; amides; ethers; ureas; ferrocene; sulfinic acids and their salts; salts of ferrocyanide; ascorbic acid and its salts; dithiocarbamic acid and its salts; salts of xanthates; salts of ethylene diamine tetraacetic acid; and salts of tetraphenylboronic acid. Such initiators are sensitive to both UV and visible light

European Patent Publication No. EP 0 563 925 A1 discloses photopolymerization initiators including a sensitizing compound that is capable of absorbing radiation in the range of about 250-1000 nm and 2-aryl-4,6-bis(trichloromethyl)-1,3,5-triazine. Exemplary sensitizing compounds that are disclosed include: cyanine dye, merocyanine dye, coumarin dye, ketocoumarin dye, (thio)xanthene dye, acridine dye, thiazole dye, thiazine dye, oxazine dye, azine dye, aminoketone dye, squarylium dye, pyridinium dye, (thia)pyrylium dye, porphyrin dye, triaryl methane dye, (poly)methane dye, amino styryl compounds and aromatic polycyclic hydrocarbons. These photopolymerization initiators are sensitive to UV and visible light.

U.S. Patent No. 5,395,862 to Neckers et al., which is incorporated by reference herein, discloses fluorone photoinitiators, which are sensitive to visible light. Such fluorone initiator systems also include a coinitiator, which is capable of accepting an electron from the excited fluorone species. Exemplary coinitiators are disclosed, including: onium salts, nitrohalomethanes and diazosulfones. U.S. Patent No. 5,451,343 to Neckers et al., which is incorporated herein by reference, discloses Fluorone and pyronin-Y derivatives as initiators that absorb light at wavelengths of greater than 350 nm. U.S. Patent No. 5,545,676 to Patazzotto et al., which is incorporated by reference herein, discloses a three-part photoinitiator system, which cures under UV or visible light The three-part system includes an arylidonium salt, a sensitizing compound and an electron donor. Exemplary iodonium salts include diphenyliodonium salts. Exemplary sensitizers and electron donors for use in the three-part system also are disclosed. Additionally, the sensitizer is capable of absorbing light in the range of about 300-1000 nm.

The initiators set forth above are for the purposes of illustration only and are in no way meant to limit the initiators that may be used in the present invention.

Initiators are employed in amounts of about 0.1% to about 10% by weight of the total composition. More desirably, the initiator is present in amounts of 0.5% to about 5% by weight of the total composition.

Optional additives, such as, but not limited to, stabilizers, inhibitors, oxygen scavenging agents, fillers, dyes, colors, pigments, adhesion promoters, plasticizers, toughening agents, reinforcing agents, fluorescing agents, rheological control agents, wetting agents, antioxidants and combinations thereof also may be included in the compositions of the present invention,

Some embodiments may include a combination of the following: an alkyl (meth)acrylate polymer selected from homopolymers of C₁-C₁₀ alkyl (meth)acrylates and copolymers of C₁-C₁₀ alkyl (meth)acrylates, as the elastomer, present in amounts of about 35% to about 65% by weight of the composition, a monofunctional reactant present in amounts of about 1.0% to about 25% by weight of the composition and a UV initiator present in amounts of about 0.1% to about 10.0% by weight of the composition. More specifically, in some embodiments, the elastomer may be present in amounts of about 50% to about 65% by weight of the composition.

In some embodiments, the combination of components may include an alkyl (meth)acrylate polymer selected from homopolymers of C₁-C₁₀ alkyl (meth)acrylates and copolymers of C₁-C₁₀ alkyl (meth)acrylates, as the elastomer, present in amounts of about 35% to about 65% by weight of the composition, a monofunctional reactant present in amounts of about 1.0% to about 25% by weight of the composition and a visible light initiator present in amounts of about 0.1% to about 10.0% by weight of the composition. More specifically, in some embodiments, the elastomer may be present in amounts of about 50% to about 65% by weight of the composition.

Some embodiments are directed to compositions that include an elastomer, which contains at least one polyfunctional (meth)acrylate portion and at least one monofunctional (meth)acrylate portion, present in amounts of about 35% to about 95 % by weight of the composition, a multifunctional (meth)acrylate present in amounts of about 1.0% to about 25% by weight of the composition and a UV initiator present in amounts of about 0.1% to about 10.0% by weight of the composition. More specifically, in some embodiments, the elastomer may be present in amounts of about 50% to about 95% by weight of the composition.

Other compositions of the present invention may include an alkyl (meth)acrylate polymer selected from homopolymers of C₁-C₁₀ alkyl (meth)acrylates and copolymers of C₁-C₁₀ alkyl (meth)acrylates, as the elastomer, present in amounts of about 35% to about 95% by weight of the composition, a monofunctional reactant present in amounts of about 1.0% to about 25% by weight of the composition and a UV initiator present in amounts of about 0.1 % to about 10.0% by weight of the composition. More specifically, in some embodiments, the elastomer may be present in amounts of about 50% to about 95% by weight of the composition.

In some embodiments, the combination of components may include an alkyl (meth)acrylate polymer selected from homopolymers of C₁-C₁₀ alkyl (meth)acrylates and copolymers of C₁-C₁₀ alkyl (meth)acrylates, as the elastomer, present in amounts of about 35% to about 95% by weight of the composition, a monofunctional reactant present in amounts of about 1.0% to about 25% by weight of the composition and a visible light initiator present in amounts of about 0.1% to about 10.0% by weight of the composition. More specifically, in some embodiments, the elastomer may be present in amounts of about 50% to about 95% by weight of the composition.

The present invention also is directed to methods for applying a seal to an article. More specifically, the components described above may be mixed to from curable compositions In various combinations and amounts. In some embodiments, the composition may be heated to a temperature of 25-250°C, desirably 90-170°C. The curable composition then may be deposited, e.g., metered, onto an article or surface to be sealed in the shape and thickness desired to form an uncured seal. The uncured seal may be irradiated for a time sufficient to form a cured seal. Radiation may include UV or visible light. Thus, the seal is formed in place directly on the object to be sealed, rather than in a separate molding step. Typically, uncured seals are formed in thicknesses of 1-15 mm, desirably in thicknesses of 2-8 mm.

In some embodiments, robotized hot melt equipment may be used to apply gaskets in place. For instance, in some embodiments, a curable composition described above, which contains a low viscosity elastomer component, may be introduced to a drum having a heated platen and piston. The composition, when heated, becomes soft and extrudable. The composition may be forced out of the drum by the action of the piston, generally at relatively low pressures, typically less than 5.0 bars (i.e. 0.5 MPas). The composition then may be fed by gear or piston pumping through heated tubing to an application gun fitted to a multidimensional industrial robot capable of precise and rapid metering. In this way, the composition can be introduced into a groove of a part such as a thermoplastic article that has just been produced, for example by molding. The bead of uncured elastomer in the groove may solidify rapidly as it cools and form an uncured sealing element. The groove may be in a part made from other materials as well, including but not limited to metal.

Alternatively, the composition may be deposited onto the exterior of an object to form a seal. This hot melt application method may be desirable for low viscosity elastomers.

In other embodiments, relatively high viscosity compositions or compositions of relatively low heat resistance may be formed into uncured seals by the gasketing in place technique. Instead of using hot melt equipment, screw extruders may be utilized to deliver the elastomeric composition to the article to be sealed. An extruder that is used in combination with a flexible arm to apply a bead of uncured elastomer to a groove is particularly desirably for such gasketing in place processes. This differs from conventional extruder technology in that the extruder is not utilized to form the finished part. Instead, it pumps the uncured elastomer composition to a robotized application head that meters the composition and deposits it at the location to be sealed. Use of screw extruders results in relatively high energy input to the polymer compared with processes that utilize hot melt equipment In order to minimize elastomer degradation in the extruder, it is desirable that the extrusion process not cause the temperature of the compound to rise above 250°C. This generally requires slow extrusion speeds. Those skilled in the art will recognize that the appropriate temperature for extrusion will be dependent on the viscosity of the uncured elastomer, the molecular weight of the uncured elastomer, the level of crosslinking agent, the decomposition temperature of the photoinitiator and the volatilization temperature of the crosslinking agent and will select a value within the range of about 25-250°C.

Such cure-in-place applications are described in U.S. Patent No. 6,506,460, referred to above.

As mentioned above, once the composition is deposited onto a surface to be sealed, it may be irradiated for a time sufficient to form a cured seal. Depending upon the embodiment, radiation may include UV and/or visible light. For visible light radiation, LED-based light generation devices may be employed. Such devices include at least one LED coupled to a power supply, which device delivers a high light output to the composition to be cured. LED devices are described more fully in International Patent Publication No. WO 2004/011848 A2 and assignee's co-pending U.S. Provisional Patent Application No. 60/579,824, entitled "High Power Led Electro-Optic Assembly" and filed on June 15, 2004, which is incorporated by reference herein in its entirety.

Examples of light sources that can provide both UV and visible light include arc lamps. Conventional arc lamps such as mercury short arc lamps may be employed. UV curing lamp assemblies, which may include arc lamps, such as those disclosed in U.S. Patent Nos. 6,520,663 to Holmes et al. and 6,881,964 to Holmes, the contents of which are incorporated herein by reference in their entirety, may be used.

An example of a commercially available lamp assembly useful for UV and/or visible light curing is the "ZETA 7420" (available from Henkel Corporation, Rocky Hill, CT.). The "ZETA 7420" includes a glass filter to reduce short and medium wavelength lamp emissions. The assembly can emit light in the visible blue and green region.

### EXAMPLES

### Example 1:

A composition of the present invention, containing an acrylate polymer, monofunctional reactants and UV initiator, was prepared in accordance with the following.

**TABLE 1**

| **Component** | **Weight %** |
|---|---|
| Acrylol group terminated polyacrylate¹ | 69.25 |
| Silyated Fumed Silica | 8.0 |
| 2-ethylhexyl acrylate | 4.0 |
| Isobornyl acrylate | 15.0 |
| Tetrakis[methylene(3,5-di-tert-butyl-4-hydroxyhydrocinnamate)] methane² | 2.0 |
| Tris-[coploy(oxypropylene)(oxypropylene)] ether of trimethylol³ | 0.25 |
| Acrylic acid | 0.5 |
| UV initiator⁴ | 1.0 |

| | |
|---|---|
| ¹ Kaneka RC220C (commercially available from Kaneka Corp.) ² IRGANOX 1010 (commercially available from Ciba Specialty Chemicals) ³ Pluracol V-10 (commercially available from BASF Corp.) ⁴ DAROCUR 4265 (commercially available from Ciba Specialty Chemicals) | |

The components listed in Table 1 above were combined to prepare a UV curable CIPG composition. The composition then was cured by exposure to UV light The composition was tested for a variety of properties, the results of which are listed in Table 2 below.

**TABLE 2**

| **Test** | **Result** |
|---|---|
| Extrusion rate | 150 g/min. |
| Boeing flow | 0.2 inches/2 min. |
| Durometer (Shore A) | 45 |
| Tensile strength | 505 psi |
| Elongation at break | 275% |
| Compression set (70 hrs at 150°C) | 24% |
| Compression set (1000 hrs at 150°C) | 68% |
| Maximum compressibility | 50% |
| Adhesion to aluminum | 120 psi |

The cured composition exposed to 1000 hours at 150°C additionally exhibited the following: hardness of 53 Shore A; residual elongation of 168; and percent change in elongation of -39%.

### Example 2:

A composition of the present invention, containing an acrylate polymer, monofunctional reactant and UV initiator, was prepared in accordance with the following.

**TABLE 3**

| **Component** | **Weight %** |
|---|---|
| Acrylol group terminated polyacrylate¹ | 82 |
| Silyated Fumed Silica | 7 |
| Isobornyl acrylate | 8 |
| Tetrakis[methylene(3,5-di-tert-butyl-4-hydroxyhydrocinnamate)] methane² | 1.0 |
| 2,2- Diethoxyacetophenone | 2 |

| | |
|---|---|
| ¹ Kaneka RC200C (commercially available from Kaneka Corp.) ² IRGANOX 1010 (commercially available from Ciba Specialty Chemicals) | |

The components listed in Table 3 above were combined to prepare a UV curable CIPG composition. The composition then was cured by exposure to UV light. The composition was tested for a variety of properties, the results of which are listed in Table 4 below.

**TABLE 4**

| **Test** | **Result** |
|---|---|
| Extrusion rate | 180 g/min. |
| Boeing flow | 0.6 inches/2 min. |
| Durometer (Shore A) | 48 |
| Tensile strength | 420 psi |
| Elongation at break | 163% |
| Compression set (70 hrs at 150°C) | 17% |
| Maximum compressibility | 40% |
| Adhesion to aluminum | 65 psi |

### Example 3:

A composition of the present invention, containing an acrylate polymer, monofunctional reactants and UV initiator, was prepared in accordance with the following.

**TABLE 5**

| **Component** | **Weight %** |
|---|---|
| Acrylol group terminated polyacrylate¹ | 45 |
| Silyated Fumed Silica | 18 |
| Ethoxyethoxyethyl acrylate | 20 |
| Isobornyl acrylate | 13 |
| Tetrakis[methylene(3,5-di-tert-butyl-4-hydroxyhydrocinnamate)] methane² | 2.0 |
| Acrylic acid | 1.0 |
| UV initiator³ | 1.0 |

| | |
|---|---|
| ¹ Kaneka RC200C (commercially available from Kaneka Corp.) ² IRGANOX 1010 (commercially available from Ciba Specialty Chemicals) ³ DAROCUR 4265 (commercially available from Ciba Specialty Chemicals) | |

The components listed in Table 5 above were combined to prepare a UV curable CIPG composition. The composition then was cured by exposure to UV light. The composition was tested for a variety of properties, the results of which are listed in Table 6 below.

**TABLE 6**

| **Test** | **Result** |
|---|---|
| Extrusion rate | 89 g/min. |
| Boeing flow | 0 inches/2 min. |
| Durometer (Shore A) | 53 |
| Tensile strength | 531 psi |
| Elongation at break | 267% |
| Compression set (70 hrs at 150°C) | 27% |
| Maximum compressibility | 50% |
| Adhesion to aluminum | 185 psi |

### Example 4:

A composition of the present invention, containing an acrylate polymer, monofunctional reactants and UV initiator, was prepared in accordance with the following.

**TABLE7**

| **Component** | **Weight %** |
|---|---|
| Acrylol group terminated polyacrylate¹ | 58 |
| Silyated Fumed Silica | 14 |
| Ethoxyethoxyethyl acrylate | 7 |
| Isobornyl acrylate | 18 |
| Tetrakis[methylene(3,5-di-tert-butyl-4-hydroxyhydrocinnamate)] methane² | 1.0 |
| Acrylic acid | 1.0 |
| UV initiator³ | 1.0 |

| | |
|---|---|
| ¹ Kaneka RC200C (commercially available from Kaneka Corp.) ² IRGANOX 1010 (commercially available from Ciba Specialty Chemicals) ³ DAROCUR 4265 (commercially available from Ciba Specialty Chemicals) | |

The components listed in Table 7 above were combined to prepare a UV curable CIPG composition. The composition then was cured by exposure to UV light. The composition was tested for a variety of properties, the results of which are listed in Table 8 below.

**TABLE 8**

| **Test** | **Result** |
|---|---|
| Extrusion rate | 155 g/min. |
| Boeing flow | 0.1 inches/2 min. |
| Durometer (Shore A) | 55 |
| Tensile strength | 528 psi |
| Elongation at break | 240% |
| Compression set (70 hrs at 150°C) | 25% |
| Maximum compressibility | 50% |
| Adhesion to aluminum | 150 psi |

### Example 5:

A composition of the present invention, containing an acrylate polymer, monofunctional and multifunctional reactants and UV initiator, was prepared in accordance with the following.

**TABLE 9**

| **Component** | **Weight%** |
|---|---|
| Acrylol group terminated polyacrylate¹ | 65 |
| Silyated Fumed Silica | 11.2 |
| Ethoxyethoxyethyl acrylate | 15 |
| Trimethylolpropane triacrylate | 5 |
| Tetrakis[methylene(3,5-di-tert-butyl-4-hydroxyhydrocinnamate)] methane² | 0.8 |
| Acrylic acid | 1.0 |
| 2,2-Diethoxyacetophenone | 2.0 |

| | |
|---|---|
| ¹ Kaneka RC200C (commercially available from Kaneka Corp.) ³ IRGANOX 1010 (commercially available from Ciba Specialty Chemicals) | |

The components listed in Table 9 above were combined to prepare a UV curable CIPG composition. The composition then was cured by exposure to UV light. The composition was tested for a variety of properties, the results of which ate listed in Table 10 below.

**TABLE 10**

| **Test** | **Result** |
|---|---|
| Durometer (Shore A) | 60 |
| Tensile strength | 498 psi |
| Elongation at break | 80% |
| Compression set (70 hrs at 150°C) | 25% |
| Maximum compressibility | 25% |

### Example 6:

A composition of the present invention, cantaining an acrylate polymer, multifunctional reactant and UV initiator, was prepared in accordance with the following.

**TABLE 11**

| **Component** | **Weight %** |
|---|---|
| Acrylol group terminated polyacrylate¹ | 65 |
| Silyated Fumed Silica | 11.2 |
| Ethoxylated bispenol A diacrylate | 20 |
| Tetrakis[methylene(3,5-di-tert-butyl-4-hydroxyhydrocinnamate)] methane² | 1 |
| Acrylic acid | 1.0 |
| 2,2-Diethoxyacetophenone | 2.0 |

| | |
|---|---|
| ¹ Kaneka RC20DC (commercially available from Kaneka Corp.) ² IRGANOX 1010 (commercially available from Ciba Specialty Chemicals) | |

The components listed in Table 11 above were combined to prepare a UV curable CIPG composition. The composition then was cured by exposure to UV light. The composition exhibited a durometer of 93 Shore A.

### Example 7:

A composition of the present invention, containing an acrylate polymer, monofunctional and multifunctional reactants and UV initiator, was prepared in accordance with the following.

**TABLE 12**

| **Component** | **Weight %** |
|---|---|
| Acrylol group terminated polyacrylate¹ | 65 |
| Silyated Fumed Silica | 11.2 |
| Ethoxyethoxyethyl acrylate | 10 |
| Ethoxylated bispenol A diacrylate | 10 |
| Tetrakis[ methylene(3,5-di-tert-butyl-4-hydroxyhydrocinnamate)] methane | 0.8 |
| Acrylic acid | 1.0 |
| 2,2- Diethoxyacetophenone | 2.0 |

| | |
|---|---|
| ¹ Kaneka RC200C (commercially available from Kaneka Corp.) ² IRGANOX 1010 (commercially available from Ciba Specialty Chemicals) | |

The components listed in Table 12 above were combined to prepare a UV curable CIPG composition. The composition then was cured by exposure to UV light. The composition was tested for a variety of properties, the results of which are listed in Table 13 below.

**TABLE 13**

| **Test** | **Result** |
|---|---|
| Durometer (Shore A) | 63 |
| Tensile strength | 686 psi |
| Elongation at break | 86% |
| Compression set (70 hrs at 150°C) | 26% |
| Maximum compressibility | 25% |

### Example 8:

A composition of the present invention, containing an acrylate polymer, monofunctional reactants and UV initiator, was prepared in accordance with the following.

**TABLE 14**

| **Component** | **Weight %** |
|---|---|
| Acrylol group terminated polyacrylate¹ | 65.5 |
| Silyated Fumed Silica | 11.7 |
| Ethoxyethoxyethyl acrylate | 4 |
| Isobornyl Acrylate | 15 |
| Tetrakis [methylene(3,5-di-tert-butyl-4-hydroxyhydrocinnamate)] methane² | 0.8 |
| Acrylic acid | 1.0 |
| 2,2- Diethoxyacetophenone | 2.0 |

| | |
|---|---|
| ¹ Kaneka RC200C (commercially available from Kaneka Corp.) ² IRGANOX 1010 (commercially available from Ciba Specialty Chemicals) | |

The components listed in Table 14 above were combined to prepare a UV curable CIPG composition. The composition was similar to those of Examples 5-7 in both components and amounts employed, except that only monofunctional reactants were included. The composition then was cured by exposure to UV light. The composition was tested for a variety of properties, the results of which are listed in Table 15 below.

**TABLE 15**

| **Test** | **Result** |
|---|---|
| Durometer (Shore A) | 50 |
| Tensile strength | 484 psi |
| Elongation at break | 203% |
| Compression set (70 hrs at 150°C) | 22% |
| Maximum compressibility | 45% |

### Example 9:

A composition of the present invention, containing an acrylate polymer, monofunctional reactants and UV initiator, was prepared in accordance with the following.

**TABLE 16**

| **Component** | **Weight %** |
|---|---|
| Acrylol group terminated polyacrylate¹ | 37.5 |
| Silyated Fumed Silica | 23 |
| 2-ethylhexyl acrylate | 28 |
| Isobornyl acrylate | 8 |
| Tetrakis[methylene(3,5-di-tert-butyl-4-hydroxyhydrocinnamate)] methane² | 2.0 |
| Acrylic acid | 0.5 |
| UV initiator¹ | 1.0 |

| | |
|---|---|
| ¹ Kaneka RC220C (commercially available from Kaneka Corp.) ² IRGANOX 1010 (commercially available from Ciba Specialty Chemicals) ³ DAROCUR 4265 (commercially available from Ciba Specialty Chemicals) | |

The components listed in Table 16 above were combined to prepare a UV curable CIPG composition. The composition then was cured by exposure to UV light. The composition was tested for a variety of properties, the results of which are listed in Table 17 below.

**TABLE 17**

| **Test** | **Result** |
|---|---|
| Durometer (Shore A) | 57 |
| Tensile strength | 620 psi |
| Elongation at break | 295% |
| Compression set (22 hrs at 177°C) | 33% |
| Maximum compressibility | 50% |

### Example 10:

A composition of the present invention, containing an acrylate polymer, monofunctional reactant and visible light initiator, was prepared in accordance with the following.

**TABLE 18**

| **Component** | **Weight %** |
|---|---|
| Acrylol group terminated polyacrylate¹ | 88.05 |
| Fluorone dye² | 0.07 |
| Triazine | 0.28 |
| 4-ethyl-N,N-dimethylaminobenzoate | 2.38 |
| N,N-dimethylacrylamide | 9.22 |

| | |
|---|---|
| ¹ Kaneka RC200C (commercially available from Kaneka Corp.) ² 5,7-diiodo-3-butoxy-6-fluorone (commercially available as H-Nu 470 from Spectra Group, Ltd.) | |

The components listed in Table 18 above were combined to prepare a visible light curable CIPG composition on a 7.7g scale. The composition then was cured by exposure to blue (visible) light. The cured composition was found to fixture two glass slides separated by 1.0 mm when irradiated for 30 seconds with a low-intensity visible light source.

### Example 11:

A composition of the present invention, containing an acrylate polymer, monofunctional reactant and visible light initiator, was prepared in accordance with the following.

**TABLE 19**

| **Component** | **Weight %** |
|---|---|
| Acrylol group terminated polyacrylate¹ | 88.91 |
| Fluorone dye | 0.11 |
| Iodonium salt | 0.30 |
| Methyldiethanolamine (MDEA) | 0.47 |
| N,N-Dimethylacrylamide | 10.21 |

| | |
|---|---|
| ¹ Kaneka RC200C (commercially available from Kaneka Corp.) ² 5,7-diiodo-3-butoxy-6-fluorone (commercially available as H-Nu 470 from Spectra Group, Ltd.) | |

The components listed in Table 19 above were combined to prepare a visible light curable CIPG composition on a 5.1g scale. The composition then was cured by exposure to blue (visible) light. The cured composition was found to fixture two glass slides separated by 1.0 mm when irradiated for 30 seconds with a low-intensity visible light source.

### Example 12:

A composition of the present invention, containing an acrylate polymer, monofunctional reactant and visible light initiator, was prepared in accordance with the following.

**TABLE20**

| **Component** | **Weight %** |
|---|---|
| Acrylol group terminated polyacrylate¹ | 72.37 |
| Fluorone dye | 0.06 |
| Triazine | 0.25 |
| MDEA | 2.08 |
| N,N-Dimethylacrylamide | 8.33 |
| Fumed silica | 16.91 |

| | |
|---|---|
| ¹ Kaneka RC200C (commercially available from Kaneka Corp.) ² 5,7-diiodo-3-butoxy-6-fluorone (commercially available as H-Nu 470 from Spectra Group, Ltd.) | |

The components listed in Table 20 above were combined and mixed in a DAC 400 FVZ speed mixer to prepare a visible light curable CIPG composition. The composition then was cured with a "ZETA 7420" broad spectrum (white) visible light. The cured composition exhibited the following properties: physical appearance of a flexible, clear, red-orange solid; hardness of 38 Shore A; compression set (177 °C/22 hours) of 58%; compression set (150 °C/1 week) of 78%; tensile strength of 284 ± 12 psi; elongation of 161 ± 9%; and glass transition (defined as onset point in DSC) of -30 °C.

### Example 13:

A composition of the present invention, containing an acrylate polymer, monofunctional reactant and visible light initiator, was prepared in accordance with the following.

**TABLE 21**

| **Component** | **Weight %** |
|---|---|
| Acrylol group terminated polyacrylate¹ | 69.13 |
| Fluorone dye | 0.07 |
| Triazine | 0.3 |
| MDEA | 2.5 |
| N,N-Dimethylacrylamide | 10 |
| Fumed silica | 17 |
| Tetrakis[methylene(3,5-di-tert-butyl-4-hydroxyhydrocinnamate)] methane³ | 1 |

| | |
|---|---|
| ¹ Kaneka RC200C (commercially availale from Kaneka Corp.) ² 5,7-diiodo-3-butoxy-6-fluorone (commercially available as H-Nu 470 from Spectra Group, Ltd.) ³ IRGANOX 1010 (commercially available from Ciba Specialty Chemicals) | |

The components listed in Table 21 above were combined to prepare a visible light curable CIPG composition. The composition then was cured with a "ZETA 7420" broad spectrum (white) visible light The cured composition exhibited the following properties: hardness of 51 Shore A; compression set (177 °C/22 hours) of 66%; compression set (150 °C/1 week) of 88%; tensile strength of 525 ± 35 psi; and elongation of 202 ± 17%.

### Example 14:

A composition of the present invention, containing an acrylate polymer, monofunctional reactants and visible light initiator, was prepared in accordance with the following.

**TABLE 22**

| **Component** | **Weight %** |
|---|---|
| Acrylol group terminated polyacrylate¹ | 46.11 |
| Fluorone dye² | 0.07 |
| Triazine | 0.3 |
| MDEA | 2.5 |
| Isobornyl acrylate | 17.66 |
| Ethoxyethoxyethyl acrylate | 12.75 |
| Acrylic acid | 1.96 |
| Fumed silica | 17.66 |
| Tetrakis[methylene(3,5-di-tert-butyl-4-hydroxyhydrocinnamate)] methane³ | 0.98 |

| | |
|---|---|
| ¹ Kaneka RC200C (commercially available from Kaneka Corp.) ² 5,7-diiodo-3-butoxy-6-fluorone (commercially available as H-Nu 470 from Spectra Group, Ltd.) ³ IRGANOX 1010 (commercially available from Ciba Specialty Chemicals) | |

The components listed in Table 22 above were combined to prepare a visible light curable CIPG composition. A portion of the composition then was cured by exposure to blue (visible) light (470 nm). The composition provided a soft, tacky solid after 60 seconds of irradiation at an intensity of 28 mW/cm².

A second portion of the composition was cured with a "ZETA 7420" broad spectrum (white) visible light. The cured composition exhibited the following properties: hardness of 38 Shore A; compression set (177 °C/22 hr) of 90%; tensile strength of 296±43 psi; elongation of 219 ± 18%; and glass transition of -35 °C.

### Example 15:

A composition of the present invention, containing an acrylate polymer, monofunctional reactants and visible light initiator, was prepared in accordance with the following.

**TABLE 23**

| **Component** | **Weight %** |
|---|---|
| Acrylol group terminated polyacrylate¹ | 47.03 |
| Fluorone dye² | 0.07 |
| Triazine | 0.31 |
| MDEA | 2.55 |
| Isobornyl acrylate | 18.06 |
| Ethoxyethoxyethyl acrylate | 13 |
| Fumed silica | 18.01 |
| Tetrakis[methylene(3,5-di-tert-butyl-4-hydroxyhydrocinnamate)] methane³ | 1 |

| | |
|---|---|
| ¹ Kaneka RC200C (commercially available from Kaneka Corp.) ² 5,7-diiodo-3-butoxy-6-fluorone (commercially available as H-Nu 470 from Spectra Group, Ltd.) ³ IRGANOX 1010 (commercially available from Ciba Specialty Chemicals) | |

The components listed in Table 23 above were combined to prepare a visible light curable CIPG composition. A portion of the composition then was cured by exposure to blue (visible) light (470 nm). The composition provided a soft, tacky solid after 60 seconds of irradiation at an intensity of 28 mW/cm².

A second portion of the composition was cured with a "ZETA 7420" broad spectrum (white) visible light. The cured composition exhibited the following properties: hardness of 29 Shore A; compression set (177 °C/22 hr) of 79%; tensile strength of 314 ± 12 psi; elongation of 262 ± 2%; and glass transition of -34 °C.

### Example 16:

A composition of the present invention, containing an acrylate polymer, monofunctional reactants and visible light initiator, was prepared in accordance with the following.

**TABLE 24**

| **Component** | **Weight %** |
|---|---|
| Acrylol group terminated polyacrylate¹ | 76.19 |
| Fluorone dye | 0.06 |
| Triazine | 0.25 |
| MDEA | 2.08 |
| N,N-Dimethylacrylamide | 8.33 |
| Fumed silica | 16.91 |

| | |
|---|---|
| ¹ Kaneka RC200C (commercially available from Kaneka Corp.) ² 2,4,5,7-tetraiodo-3-hydroxy-6-fluorone (developmental sample as H-Nu 535 from Spectra Group, Ltd.) | |

The components listed in Table 24 above were combined to prepare a visible light curable CIPG composition. A portion of the composition then was cured by exposure to green (visible) light (535 nm LED). The composition provided a soft, dry solid after about 18 minutes of irradiation at an intensity of 26 mW/cm².

## Claims

1. A composition comprising:
a) 35 to 95 weight percent of an elastomer comprising alkyl (meth)acrylate polymers selected from the group consisting of homopolymers of C₁-C₁₀ alkyl (meth)acrylates and copolymers of C₁-C₁₀ alkyl (meth)acrylates;
b) 1.0 to 25 weight percent of a monofunctional reactant; and
c) 0.1 to 10.0 weight percent of a photoinitiator.

2. The composition of claim 1 comprising:
a) 35 to 65 weight percent of an elastomer comprising alkyl (meth)acrylate polymers selected from the group consisting of homopolymers of C₁-C₁₀ alkyl (meth)acrylates and copolymers of C₁-C₁₀ alkyl (meth)acrylates;
b) 1.0 to 25 weight percent of a monofunctional reactant; and
c) 0.1 to 10.0 weight percent of a photoinitiator.

3. The composition of one of claims 1 and 2, wherein said monofunctional reactant is selected from the group consisting of: (meth)acrylate monomers; cyclic acrylate monomers; and styrenic monomers.

4. A composition comprising:
a) 35 to 95 weight percent of an elastomer comprising at least one polyfunctional (meth)acrylate portion and at least one monofunctional (meth)acrylate portion;
b) 1.0 to 25 weight percent of at least one multifunctional (meth)acrylate; and
c) 0.1 to 10.0 weight percent of a photoinitiator.

5. The composition of claim 4 comprising:
a) 35 to 95 weight percent of an elastomer comprising at least one polyfunctional (meth)acrylate portion and at least one monofunctional (meth)acrylate portion;
b) 1.0 to 25 weight percent of a reactant comprising at least one multifunctional (meth)acrylate in combination with at least one monofunctional (meth)acrylate; and
c) 0.1 to 10.0 weight percent of a photoinitiator.

6. The composition of one of claims 1, 2, and 5, wherein said photoinitiator is a visible light photoinitiator.

7. A composition of claim 4, wherein said multifunctional (meth)acrylate comprises a (meth)acrylic crosslinking agent.

8. The composition of claim 7, wherein said (meth)acrylic crosslinking agent is selected from the group consisting of: ethylene glycol diacrylate; ethylene glycol dimethacrylate; 1,6-hexanediol diacrylate; 1,6-hexanediol dimethacrylate; 1,4-butanediol diacrylate; pentaerythritol triacrylate; pentaerythritol tetraacrylate; dipentaerythritol pentaacrylate, methoxy-1,6-hexanediolpentaerythritol triacrylate; trimethylolpropane triacrylate; tetraethylene glycol diacrylate; polymethacrylate urethanes; epoxy acrylates; polyester acrylate monomers and oligomers; trimethylolpropane propoxylate triacrylate; poly-n-butyleneoxide glycol diacrylates; bisphenol A alkylene oxide adduct diacrylates; and mixtures thereof.

9. The composition of one of claims 1, 2, or 4, wherein said photoinitiator is selected from the group consisting of: benzophenone; substituted benzophenones; acetophenone; substituted acetophenones; benzoin; benzoin alkyl esters; xanthone; substituted xanthones; phosphine oxides; diethoxy-acetophenone; benzoin methyl ether; benzoin ethyl ether; benzoin isopropyl ether; diethoxyxanthone; chloro-thio-xanthone, N-methyl diethanol-amine-benzophenone; 2-hydroxy-2-methyl-1-phenyl-propan-1-one; 2-benzyl-2-(dimethylamino)-1-[4-(4-morpholinyl)phenyl]-1-butanone; and mixtures thereof.

10. The composition of claim 4, wherein said at least one monofunctional (meth)acrylate portion of said elastomer comprises at least one (meth)acryloyl terminal group.

11. A process for applying a seal to an article comprising the steps of:
a) forming a mixture of a composition according to any one of claims 1 to 10,
b) depositing said mixture on said article in the shape and thickness desired to form an uncured seal; and
c) irradiating said uncured seal with radiation appropriate to and for a time sufficient to form a cured seal.

## Patentansprüche

1. Zusammensetzung, die Folgendes umfasst:
a) 35 bis 95 Gewichtsprozent eines Elastomers, das Alkyl(meth)acrylatPolymere umfasst, die aus der Gruppe bestehend aus Homopolymeren von C₁-C₁₀-Alkyl(meth)acrylaten und Copolymeren von C₁-C₁₀-Alkyl(meth)acrylaten ausgewählt sind;
b) 1,0 bis 25 Gewichtsprozent eines monofunktionellen Reaktionspartners und
c) 0,1 bis 10,0 Gewichtsprozent eines Photoinitiators.

2. Zusammensetzung nach Anspruch 1, die Folgendes umfasst:
a) 35 bis 65 Gewichtsprozent eines Elastomers, das Alkyl(meth)acrylatPolymere umfasst, die aus der Gruppe bestehend aus Homopolymeren von C₁-C₁₀-Alkyl(meth)acrylaten und Copolymeren von C₁-C₁₀-Alkyl(meth)acrylaten ausgewählt sind;
b) 1,0 bis 25 Gewichtsprozent eines monofunktionellen Reaktionspartners und
c) 0,1 bis 10,0 Gewichtsprozent eines Photoinitiators.

3. Zusammensetzung nach einem der Ansprüche 1 und 2, wobei der monofunktionelle Reaktionspartner aus der Gruppe bestehend aus: (Meth)acrylat-Monomeren; cyclischen Acrylat-Monomeren und styrolischen Monomeren ausgewählt ist.

4. Zusammensetzung, die Folgendes umfasst:
a) 35 bis 95 Gewichtsprozent eines Elastomers, das mindestens einen polyfunktionellen (Meth)acrylat-Teil und mindestens einen monofunktionellen (Meth)acrylat-Teil umfasst;
b) 1,0 bis 25 Gewichtsprozent mindestens eines multifunktionellen (Meth)acrylats und
c) 0,1 bis 10,0 Gewichtsprozent eines Photoinitiators.

5. Zusammensetzung nach Anspruch 4, die Folgendes umfasst:
a) 35 bis 95 Gewichtsprozent eines Elastomers, das mindestens einen polyfunktionellen (Meth)acrylat-Teil und mindestens einen monofunktionellen (Meth)acrylat-Teil umfasst;
b) 1,0 bis 25 Gewichtsprozent eines Reaktionspartners, der mindestens ein multifunktionelles (Meth)acrylat in Kombination mit mindestens einem monofunktionellen (Meth)acrylat umfasst; und
c) 0,1 bis 10,0 Gewichtsprozent eines Photoinitiators.

6. Zusammensetzung nach einem der Ansprüche 1, 2 und 5, wobei der Photoinitiator ein durch sichtbares Licht aktivierter Photoinitiator ist.

7. Zusammensetzung nach Anspruch 4, wobei das multifunktionelle (Meth)acrylat ein (Meth)acrylat-Vernetzungsmittel umfasst.

8. Zusammensetzung nach Anspruch 7, wobei das (Meth)acrylat-Vernetzungsmittel aus der Gruppe bestehend aus: Ethylenglykoldiacrylat; Ethylenglykoldimethacrylat; 1,6-Hexandioldiacrylat; 1,6-Hexandioldimethacrylat; 1,4-Butandioldiacrylat; Pentaerythrittriacrylat; Pentaerythrittetraacrylat; Dipentaerythritpentaacrylat; Methoxy-1,6-hexandiolpentaerythrittriacrylat; Trimethylolpropantriacrylat; Tetraethylenglykoldiacrylat; Polymethacrylaturethanen; Epoxyacrylaten; Polyesteracrylat-Monomeren und - Oligomeren; Trimethylolpropanpropoxylattriacrylat; Poly-n-butylenoxidglykoldiacrylaten; Bisphenol-A-Alkylenoxidadduktdiacrylaten und Gemischen davon ausgewählt ist.

9. Zusammensetzung nach einem der Ansprüche 1, 2 oder 4, wobei der Photoinitiator aus der Gruppe bestehend aus: Benzophenon; substituierten Benzophenonen; Acetophenon; substituierten Acetophenonen; Benzoin; Benzoinalkylestern; Xanthon; substituierten Xanthonen; Phosphinoxiden; Diethoxyacetophenon; Benzoinmethylether; Benzoinethylether; Benzoinisopropylether; Diethoxyxanthon; Chlorthioxanthon; N-Methyldiethanolaminobenzophenon; 2-Hydroxy-2-methyl-1-phenylpropan-1-on; 2-Benzyl-2-(dimethylamino)-1-[4-(4-morpholinyl)phenyl]-1-butanon und Gemischen davon ausgewählt ist.

10. Zusammensetzung nach Anspruch 4, wobei der mindestens eine monofunktionelle (Meth)acrylat-Teil des Elastomers mindestens eine (Meth)acryloyl-Endgruppe umfasst.

11. Verfahren zum Aufbringen einer Dichtung auf einen Gegenstand, das die folgenden Schritte umfasst:
a) Bilden eines Gemischs einer Zusammensetzung nach einem der Ansprüche 1 bis 10;
b) Aufbringen des Gemischs auf dem Gegenstand in der gewünschten Form und Dicke, um eine ungehärtete Dichtung zu bilden; und
c) Bestrahlen der ungehärteten Dichtung mit Strahlung, die zum Bilden einer gehärteten Dichtung geeignet ist, und für einen Zeitraum, der zum Bilden einer gehärteten Dichtung ausreicht.

## Revendications

1. Composition comprenant :
a) de 35 à 95 % en poids d'un élastomère comprenant des polymères de (méth)acrylates d'alkyle choisis parmi le groupe constitué par des homopolymères de (méth)acrylates d'alkyle en C₁-C₁₀ et des copolymères de (méth)acrylates d'alkyle en C₁₋C₁₀;
b) de 1,0 à 25 % en poids d'un réactif monofonctionnel ; et
c) de 0,1 à 10,0 % en poids d'un photoinitiateur.

2. Composition selon la revendication 1, comprenant :
a) de 35 à 65 % en poids d'un élastomère comprenant des polymères de (méth)acrylates d'alkyle choisis parmi le groupe constitué par des homopolymères de (méth)acrylates d'alkyle en C₁-C₁₀ et des copolymères de (méth)acrylates d'alkyle en C₁-C₁₀;
b) de 1,0 à 25 % en poids d'un réactif monofonctionnel ; et
c) de 0,1 à 10,0 % en poids d'un photoinitiateur.

3. Composition selon l'une quelconque des revendications 1 et 2, dans laquelle ledit réactif monofonctionnel est choisi parmi le groupe constitué par : des monomères de (méth)acrylates, des monomères d'acrylates cycliques et des monomères styrénés.

4. Composition comprenant :
a) de 35 à 95 % en poids d'un élastomère comprenant au moins une portion de (méth)acrylate polyfonctionnel et au moins une portion de (méth)acrylate monofonctionnel ;
b) de 1,0 à 25 % en poids d'au moins un méthacrylate multifonctionnel ; et
c) de 0,1 à 10,0 % en poids d'un photoinitiateur.

5. Composition selon la revendication 4, comprenant :
a) de 35 à 95 % en poids d'un élastomère comprenant au moins une portion de (méth)acrylate polyfonctionnel et au moins une portion de (méth)acrylate monofonctionnel ;
b) de 1,0 à 25 % en poids d'un réactif comprenant au moins un (méth)acrylate multifonctionnel en combinaison avec au moins un (méth)acrylate monofonctionnel ; et
c) de 0,1 à 10,0 % en poids d'un photoinitiateur.

6. Composition selon l'une quelconque des revendications 1, 2 et 5, dans laquelle ledit photoinitiateur est un photoinitiateur pour la lumière visible.

7. Composition selon la revendication 4, dans laquelle ledit méthacrylate multifonctionnel comprend un agent de réticulation (méth)acrylique.

8. Composition selon la revendication 7, dans laquelle ledit agent de réticulation (méth)acrylique est choisi parmi le groupe constitué par : le diacrylate d'éthylèneglycol ; le diméthacrylate d'éthylèneglycol ; le diacrylate de 1,6-hexanediol ; le diméthacrylate de 1,6-hexanediol ; le diacrylate de 1,4-butanediol ; le triacrylate de pentaérythritol ; le tétra-acrylate de pentaérythritol ; le penta-acrylate de dipentaérythritol ; le triacrylate de méthoxy-1,6-hexanediolpentaérythritol ; le triacrylate de triméthylolpropane ; le diacrylate de tétra-éthylèneglycol ; des polyméthacrylate-uréthanes ; des époxyacrylates ; des monomères et des oligomères de polyester-acrylates ; le propoxylate triacrylate de triméthylolpropane ; des diacrylates de poly-n-oxydes de butylèneglycol :
des diacrylates d'adduits de bisphénol A - oxydes d'alkylènes ; et leurs mélanges.

9. Composition selon l'une quelconque des revendications 1, 2 ou 4, dans laquelle ledit photoinitiateur est choisi parmi le groupe constitué par : la
benzophénone ; des benzophénones substituées ; l'acétophénone ; des acétophénones substituées ; la benzoïne ; des esters alkyliques de benzoïne ; la xanthone ; des xanthones substituées ; des oxydes de phosphine ; la diéthoxy-acétophénone ; l'éther méthylique de benzoïne ; l'éther éthylique de benzoïne ; l'éther isopropylique de benzoïne ; la diéthoxyxanthone ; la chloro-thio-xanthone ; la N-méthyl-diéthanol-amine-benzophénone ; la 2-hydroxy-2-méthyl-1-phényl-propan-1-one ; la 2-benzyl-2-(diméthylamino)-1-[4-(4-morpholinyl)phényl]-1-butanone ; et leurs mélanges.

10. Composition selon la revendication 4, dans laquelle ladite au moins une portion de (méth)acrylate monofonctionnel dudit élastomère comprend au moins un groupe terminal (méth)acryloyle.

11. Procédé pour appliquer un joint d'étanchéité à un article, comprenant les étapes dans lesquelles :
a) on forme un mélange d'une composition selon l'une quelconque des revendications 1 à 10 ;
b) on dépose ledit mélange sur ledit article dans la configuration et l'épaisseur désirées pour obtenir un joint d'étanchéité non durci; et
c) on expose ledit joint d'étanchéité non durci à un rayonnement approprié pour la formation d'un joint d'étanchéité durci et pendant un laps de temps suffisant pour ladite formation.
